(19) Europäisches Patentamt
European Patent Office
Office européen des brevets

(11) **EP 1 691 360 A2**

(12) **EUROPEAN PATENT APPLICATION**

(43) Date of publication:
16.08.2006 Bulletin 2006/33

(51) Int Cl.:
*G11B 7/135* (2006.01)

(21) Application number: 06250714.0

(22) Date of filing: 10.02.2006

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK YU

(30) Priority: 15.02.2005 JP 2005038096

(71) Applicant: Konica Minolta Opto, Inc.
Hachioji-shi,
Tokyo 192-8505 (JP)

(72) Inventors:
• Nagai, Fumio,
Konica Minolta Opto, Inc.
Hachioji-shi
Tokyo 192-8505 (JP)
• Kimura, Tohru,
Konica Minolta Opto, Inc.
Hachioji-shi
Tokyo 192-8505 (JP)

(74) Representative: Roberts, Mark Peter
J.A. Kemp & Co.,
14 South Square,
Gray's Inn
London WC1R 5JJ (GB)

(54) **Optical unit and optical pickup apparatus**

(57) An optical unit for an optical pickup apparatus for recording and or reproducing information onto or from the first to third optical recording media by applying the first to third light beams emitted from the first to third light sources (L1,L2,L3), the optical unit comprises a mirror (7) having dichroic mirror layer including reflecting surfaces (71a and 70a) on both surfaces and an objective lens (8) including a phase structure on the optical surface of the objective lens. The reflecting surface (71a) of the mirror reflects the first to second light beams and guides them to the objective lens. Reflecting surface (70a) reflects the third light beams and guides them to the objective lens. The phase structure on the objective lens corrects the spherical aberration of the first and the second light beams, and focuses the first light beams onto BD (10), the second beams onto DVD (11) and the third beams onto CD (12).

FIG. 1

## Description

This application is based on Japanese Patent Application No. 2005-038096 filed on February 15, 2005, in Japanese Patent Office, the entire content of which is hereby incorporated by reference.

## BACKGROUND OF THE INVENTION

The present invention relates to an optical unit which will be placed opposed to an optical recording medium and an optical pickup apparatus having the optical unit therein.

## DESCRIPTION OF RELATED ART

An optical pickup apparatus has been known as an apparatus for recording and or reproducing information onto or from optical recording media, such as MO, CD and DVD. The optical pickup apparatus includes an optical element, such as an objective lens, for focusing light beams emitted from a semiconductor laser beam source onto the information recording surface of the optical recording media.

Japanese Laid-Open Patent Publication No. 2002-40323 discloses an optical pickup apparatus having a mirror for refracting an optical path before an objective lens. According to Japanese Laid-Open Patent Publication No. 2002-40323, it becomes possible to miniaturize an optical pickup apparatus, since it is possible to shorten a distance in a straight line from a light source to an optical recording medium.

However, the optical pickup apparatus disclosed in Japanese Laid-Open Patent Publication No. 2002-40323 is designed for recording and or reproducing information onto or from two kinds of optical recording media. Accordingly, this optical pickup apparatus cannot be modified to correctly record and or reproduce information onto or from three kinds of optical recording media with keeping miniaturization by simply applying the technique associated with this optical pickup apparatus. Meanwhile, a technique for focusing incident light beams, which spherical aberration have been corrected, onto each information recording surface of each media by apply an objective lens having a diffractive structure for causing diffraction action on two different light beams having different wavelengths as an another technique for recording and or reproducing information onto or from two kinds of optical recording media. However, it is practically difficult to realize a phase structure for causing diffraction action over three kinds of wavelength when recording and or reproducing information onto or from three kinds of optical recording media. Because the wavelength of light beams applied to optical recording media, such as BD and HD-DVD which are further higher density than DVD is several times shorter than that of CD. In this case there is a problem that light-beam utilization efficiency comes down. As a result, it becomes difficult to correctly and precisely record and or reproduce information onto or from optical recording media.

## SUMMARY OF THE INVENTION

An object of the present invention is to provide an optical pickup apparatus having an optical unit capable of correctly recording and or reproducing information onto or from two kinds of optical media or three kinds of optical media including the two kinds of optical media with higher light-beam utilization efficiency. Another object of the present invention is to provide optical unit capable of miniaturizing optical pickup apparatus.

## BRIEF DESCRIPTION OF THE DRAWINGS

Fig. 1 illustrates a schematic configuration of an optical pickup apparatus of the present invention.
Fig. 2 illustrates a reflecting surface of a mirror.
Fig. 3 illustrates an optical surface of an objective lens viewing to a light source side.
Fig. 4 illustrates a drawing for explaining an offset optical axis of the third light beams.

## DETAILED DESCRIPTION OF THE PREFERRED EMBODIMENT

Preferable embodiments for solving the problems described above will be described below.

1. An optical unit of an optical pickup apparatus for recording and or reproducing information onto or from a first optical recording medium, a second optical recording medium and a third optical recording medium by applying a first light beams (light flux) having wavelength of $\lambda 1$, a second light beams having wavelength of $\lambda 2$ and a third light beams having wavelength of $\lambda 3$, where ($\lambda 1 < \lambda 2 < \lambda 3$), the optical unit comprises an objective lens having a phase structure at least on an optical surface of the objective lens, and a mirror having a first reflecting surface for reflecting two kinds of light beams out of the first light beams, the second light beams and the third light beams and a second reflecting surface for reflecting remaining one kind of light beams, the second reflecting surface being different from the first reflecting surface, the mirror guiding the first light beams, the second light beams and the third light beams reflected by the first and second reflecting surfaces to the objective lens, the second reflecting surface converting the remaining one kind of light beams into divergent light beams and guiding the divergent light beams to the objective lens, wherein the phase structure corrects spherical aberration of the two kinds of light beams and the objective lens focuses the first light beams onto the first optical recording medium, the second light beams onto the second optical recording medium and the third light beams onto the third optical recording medium.

According to the embodiment described in item 1 above, since two kinds of light beams are focused onto the information recording surface of each optical recording medium with the condition that the spherical aberration of the two kinds of light beams are corrected by the phase structure, it becomes possible to correctly record and or reproduce information onto or from the two kinds of optical recording media. Further, since the remaining one kind of light beams is focused onto the optical recording medium after that the remaining one kind of light beams is converted into divergent light beams and reflected by the second reflecting surface, it becomes possible to correctly record and or reproduce information onto or from a different optical recording medium being different from the two kinds of optical recording media. Consequently, it becomes possible to correctly record and or reproduce information onto or from three kinds of optical recording media.

Further, since the mirror separately reflects the first to the third light beams and guide the first to the third light beams to the objective lens, it becomes possible to shorten a distance in a strait line from a light source to the optical recording medium. Accordingly, it becomes possible to miniaturize an optical pickup apparatus.

2. The optical unit of item 1, wherein the first reflecting surface of the mirror reflects the first light beams and the second light beams, and the second reflecting surface of the mirror reflects the third light beams.

According to the embodiment described in item 2, since the first light beams and the second light beams, both light beams has shorter wavelengths than that of the third light beams are not converted to divergent light beams, it becomes easier to design an objective lens comparing with the situation where the first light beams and the second light beams are converted to divergent light beams.

Further, since the first light beams and the second light beams do not reach to the second reflecting surface when the first reflecting surface is configured by a wavelength-select-transmission layer, the second reflecting surface does not unnecessarily deform the cross-sectional shape of the first light beams and the second light beams. Consequently, it is not necessary to place optical elements for refine the shape of the first and the second light beams before and or after the mirror. As a result, it becomes possible to miniaturize an optical pickup apparatus.

3. The optical unit described in item 2, wherein the wavelengths of $\lambda 1$, $\lambda 2$ and $\lambda 3$ satisfy $1.9 < \lambda 3 / \lambda 1 < 2.1$ and $1.5 < \lambda 2 / \lambda 1 < 1.7$.

In general, it is difficult to correct spherical aberration by applying a phase structure when one of two kinds of wavelengths is an integer multiple.

According to the embodiment described in item 3 above, since the ratio between $\lambda 1$ and $\lambda 3$ is about 2 and the ratio between $\lambda 1$ and $\lambda 2$ is not an integer multiple, it is relatively easy to design the phase structure for correcting spherical aberration of wavelengths $\lambda 1$ and $\lambda 2$. Consequently, it becomes possible to reduce the cost for designing the optical unit.

As examples of wavelength combinations satisfying the inequality described above, for example, there are combinations of wavelengths of CD and DVD and wavelengths of CD and BD or HD-DVD.

4. The optical unit of items 2 or 3, wherein the second reflecting surface has a central area intersecting optical axis of the optical unit and a circumference area being located outside of the central area, and the objective lens focuses light beams among the third light beams guided to the central area of the second reflecting surface onto the third optical recording medium.

According to the embodiment described in item 4 above, since only light beams incident to the central area of the second reflecting surface out of the third light beams incident to the second reflecting surface are focused onto the third optical recording medium by the objective lens and the light beams incident to the circumference area of the second reflecting surface are not focused onto the third optical recording medium, it becomes possible to limit the aperture by adjusting the size of the central area. Consequently, it becomes easy to miniaturize the optical pickup apparatus comparing with the situation where proving diaphragm members around the mirror for limiting the aperture. Further, since it is possible to change the spot shape on the third optical recording medium by changing the shape of the central area, the spot shape can be adjusted to a circular shape even though the second reflecting surface is non-rotational symmetry against the optical axis. Consequently, it becomes easy to miniaturize the optical pickup apparatus comparing with the situation where proving diaphragm members around the mirror for adjusting the cross-sectional shape of the third light beams.

The third light beams incident to the circumference area may be absorbed by the circumference area, may be reflected by the circumference area or may be allowed to be flare elements not contributing to form a light spot on the third optical recording medium.

5. The optical unit of the embodiment described in item 1, wherein the second reflecting surface is a curved surface being non-rotational symmetry against an optical axis of the optical unit.

According to the embodiment described in item 5 above, it becomes possible to record and or reproduce information onto or from the third optical recording medium.

6. The optical unit of the embodiment of item 4, wherein the second reflecting surface is a curved surface being non-rotational symmetry against an optical axis of the optical unit and the central area of the second reflecting surface is shaped in an oval.

In general, when a reflecting surface is non-rotational symmetry against the optical axis, the cross-sectional shape of reflected light beams becomes oval even when the cross-sectional shape of incident light beams to the reflecting surface is circle.

According to the embodiment described in item 6, since the central area of the second reflecting surface is shaped in a curved surface being non-rotational symmetry against the optical axis, it is possible to change the cross-sectional shape of reflected light beams can be changed to circle by changing the facing direction of the oval. Accordingly, it becomes possible to correctly record and or reproduce information onto or from the third optical medium.

7. The optical unit of the embodiment described in item 6, wherein the second reflecting surface reflects the remaining one kind of light beams so that a divergent angle of the remaining one kind of light beams becomes maximum within a predetermined surface including an optical axis between the mirror and the objective lens, and the central area is shaped in an oval having a major axis in a perpendicular direction against the predetermined surface.

According to the embodiment described in item 7, since the second reflecting surface reflects the remaining one kind of light beams so that the divergent angle of the reflected light beams becomes maximum and the shape of the central area of the second reflecting surface is an oval shape having a major axis in the perpendicular direction to the predetermined surface, it is possible to surly adjust the cross-section surface of the reflected light beams into a circular shape.

8. The optical unit of the embodiments described items 1 - 7, wherein the objective lens is configured by a single lens.

According to the embodiment described in item 8, since the objective lens is configure by a single lens, it is possible to miniaturize the optical pickup apparatus comparing with the situation where the objective lens is configured by a lens unit which includes multiple lenses.

9. The optical unit of the embodiment described in items 1 - 8, wherein the phase structure is a diffractive structure, the diffractive structure being arranged to express a maximum diffraction efficiency with the same order diffracted light beams against the first to the third light beams.

According to the embodiment described in item 9, since the diffractive structure shows the maximum diffraction efficiency with the same diffraction order of the first to the third light beams, the strength of the diffraction action is proportional to the wavelengths of $\lambda 1$ - $\lambda 3$. Accordingly, the third light beams receives the strongest diffraction action among the first to the third light beams.

Accordingly, when the light beams converted into divergent light beams by the second reflecting surface is the third light beams, the spherical aberration of the third light beams is corrected by the second reflecting surface of the mirror and the diffractive structure of the objective lens being a two-step correction. Accordingly, since a part of the spherical aberration correction function is shifted to the diffractive structure, a divergent degree of the second reflecting surface against the third light beams can be minimized. As a result, it becomes possible to improve the focusing capability and the tracking capability of the optical pickup apparatus.

10. The optical unit of the embodiment described in item 9, wherein the diffractive structure is arranged to express a maximum diffraction efficiency with first order diffracted light beams of the first to the third light beams.

In general, the more diffraction order number becomes small, the diffraction efficiency of each light beam becomes high when expressing the maximum diffraction efficiency with the same diffraction order for the light beams of multiple wavelengths.

According to the embodiment described in item 10, since the diffractive structure shows the maximum diffraction efficiency with the first order diffracted light beams of the first to the third light beams, it is possible to improve each diffraction efficiency of the first to the third light beams.

11. The optical unit of the embodiment of item 3, wherein the phase structure is arranged to transmit the first light beams and the third light beams as they are guided to the phase structure and to express a maximum diffraction efficiency with first order diffracted light beams against the second light beams.

According to the embodiment described in item 11, it becomes possible to record and or reproduce information with keeping the condition of high diffraction efficiency of the first and the third light beams and to record and or reproduce information by applying the second light beams.

12. The optical unit of the embodiment described any one of items 1 - 10, further comprises an actuator for bodily moving the objective lens and the mirror.

According to the embodiment described in item 12, since the actuator bodily moves the objective lens and the mirror, it becomes possible to decrease the coma aberration caused by the movement of the objective lens comparing with the situation where the objective lens and the mirror are separately moved. Consequently, it is possible to improve the focusing capability and the tracking capability of the optical pickup apparatus.

13. The optical pickup apparatus of the embodiment described item 1, further comprises a first light source for emitting the first light beams; a second light source for emitting the second light beams, and a third light source for emitting the third light beams.

According to the embodiment described in item 13, it is possible to obtain the same effect of the embodiment described in any one of items 1 - 11. 14. The optical unit of the embodiment described in item 12, wherein an optical axis of the remaining one kind of light beams before entering into the mirror is offset from an optical axis of the two kinds of light beams.

According to the embodiment described in item 14, since the optical axis of the remaining one kind of light beams before entering into the mirror is offset from the optical axis of the two kinds of light beams, it becomes possible to coincide the optical axis of the remaining one kind of light beams after being reflected by the mirror with the optical axis of the two kinds of light beams. Consequently, it becomes possible to correctly record and or reproduce information onto the first to the third optical recording media.

15. The optical unit of the embodiment described in item 1, wherein the first optical recording medium includes a first protective layer having thickness of t1, the second optical recording medium includes a second protective layer having thickness of t2 and the third optical recording medium includes a third protective layer having thickness of t3, wherein t1, t2 and t3 satisfy t1 < t2 < t3.

16. The optical unit of the embodiment described in item 1, wherein the first optical recording medium is a BD, the second optical recording medium is a DVD and the third optical recording medium is a CD.

17. The optical unit of the embodiment described in item 15, wherein the objective lens corrects spherical aberration of two kinds of light beams caused by a thickness difference between the first, the second and the third recording media.

According to the embodiment described in item 17, since the spherical aberration is corrected, it becomes possible to record and or reproduce information onto or from the optical recoding medium.

18. A mirror for selectively transmitting or reflecting a first light beams having wavelength of $\lambda 1$, a second light beams having wavelength of $\lambda 2$ and a third light beams having wavelength of $\lambda 3$, where $\lambda 1 < \lambda 2 < \lambda 3$, the mirror comprises a first reflecting surface for reflecting two kinds of light beams out of the first light beams, the second light beams and the third light beams and transmitting remaining one kind of light beams, and a second reflecting surface including a curved surface having a predetermined curvature for converting remaining one kind of light beams transmitted through the first reflecting surface into divergent light beams and reflecting the divergent light beams.

According to the embodiment described in item 18, when the technique described in the embodiment is applied to the optical pickup apparatus having compatibility over the first to the third light beams, it becomes possible to improve the light-beam-utilization-efficiency and to correctly record and or reproduce information onto or from the recording media.

19. The mirror of the embodiment described in item 18, wherein wavelengths of $\lambda 1$, $\lambda 2$ and $\lambda 3$ satisfy $1.9 < \lambda 3 / \lambda 1 < 2.1$ and $1.5 < \lambda 2 / \lambda 1 < 1.7$.

According to the embodiment described in item 19, it is possible to obtain the same effects of the embodiment described in item 3.

20. The mirror of the embodiment described in item 18, wherein the second reflecting surface is a curved surface being a non-rotational symmetry against an optical axis of the mirror.

According to the embodiment described in item 20, it is possible to obtain the same effects of the embodiment described in item 5.

21. The mirror of the embodiment described in item 18, wherein the second reflecting surface has a central area intersecting optical axis of the optical unit and a circumference area located outside of the central area, and the second reflecting surface is a curved surface being a non-rotational symmetry against an optical axis of the optical unit, the central area of the second reflecting surface being shaped in an oval.

According to the embodiment described in item 21, it is possible to obtain the same effects of the embodiment described in item 6.

22. An optical unit of an optical pickup apparatus for recording and or reproducing information onto or from a first optical recording medium by applying a first light beams having wavelength of $\lambda 1$, a second optical recording medium by applying a second light beams having wavelength of $\lambda 2$ and a third optical recording medium by applying a third light beams having wavelength of $\lambda 3$, where $1.9 < \lambda 3 / \lambda 1 < 2.1$, the optical unit comprises an objective lens having a phase structure at least on an optical surface of the objective lens, and a mirror including a first reflecting surface for transmitting either of the first light beams or the third light beams out of the first to the third light beams and for reflecting the other light beams out of the first to the third light beams and a second reflecting surface for reflecting light beams transmitted through the first reflecting surface, the second reflecting surface being different from the first reflecting surface, the mirror guiding the first to the third light beams reflected by the first and the second reflecting surfaces to the objective lens, wherein the second reflecting surface converts spherical aberration of the light beams transmitted through the first reflecting surface into light beams which can be corrected by the objective lens and guides the light beams to the objective lens, and the phase structure of the objective lens corrects spherical aberration of two kinds of light beams reflected by the first reflecting surface of the mirror and the objective lens focuses the first to the third light beams onto each recording surface of the first to the third recording media.

According to the embodiment described in item 22, it becomes possible to record and or reproduce information onto or from three kinds of optical recording media with high light-beam-utilization-efficiency.

23. The optical unit of the embodiment described in item 22, wherein the wavelengths of $\lambda 1$ and $\lambda 2$ satisfy $1.5 < \lambda 2 / \lambda 1 < 1.7$.

According to the embodiment described in item 23, it is possible to obtain the same effects of the embodiment described in item 3.

24. The optical unit of the embodiment described in item 22, further comprises an actuator for bodily moving the objective lens and the mirror.

According to the embodiment described in item 24, it is possible to obtain the same effects of the embodiment described in item 12.

25. The optical unit of the embodiment described in item 22, wherein the first optical recording medium includes a first protective layer having thickness of t1, the second optical recording medium includes a second protective layer having thickness of t2 and the third optical recording medium includes a third protective layer having thickness of t3, wherein t1, t2 and t3 satisfy t1 < t2 < t3.

26. The optical unit of the embodiment described in item 22, wherein the first optical recording medium is a BD, the second optical recording medium is a DVD and the third optical recording medium is a CD.

27. The optical unit of the embodiment described in item 25, wherein the objective lens corrects spherical aberration of two kinds of light beams caused by a thickness difference between the first and the second recording media.

According to the embodiment described in item 27, it is possible to obtain the same effects of the embodiment described in item 17.

28. An optical unit of an optical pickup apparatus for recording and or reproducing information onto or from a first optical recording medium by applying light beams having relatively shorter wavelength among at least two kinds of light beams emitted from light sources, and a second optical recording medium by applying second light beams having relatively longer wavelength among the two kinds of light beams, wherein 1.9 < the wavelength of the second light beams / the wavelength of the first light beams < 2.1, the optical unit comprises an objective lens, and a mirror including a first reflecting surface for transmitting either of the first light beams or the second light beams and for reflecting remaining light beams out of the first and the second light beams and a second reflecting surface for reflecting light beams transmitted through the first reflecting surface, the second reflecting surface being different from the first reflecting surface, the mirror guiding the first and the second light beams reflected by the first or the second reflecting surfaces to objective lens, wherein the mirror converts spherical aberration of light beams being either the first light beams or the second light beams into light beams which can be corrected by the objective lens and guides the light beams to the objective lens, and the objective lens focuses the first and the second light beams onto each recording surface of the first and the second recording media.

According to the embodiment described in item 28, it becomes possible to improve light-beam-utilization-efficiency and record and or reproduce information onto or from an optical recording medium even when recording and or reproduce information onto or from the optical recording medium by applying two kinds of light beams having special relationship between the two kinds of light beams described above.

29. The optical unit of the embodiment described in item 28, further comprises an actuator for bodily moving the objective lens and the mirror.

According to the embodiment described in item 29, it is possible to obtain the same effects of the embodiment described in item 12.

30. The optical unit of the embodiment described in item 28, wherein the second reflecting surface is a curved surface being a non-rotational symmetry against an optical axis of the mirror.

According to the embodiment described in item 30, it is possible to obtain the same effects of the embodiment described in item 5.

31. The optical unit of the embodiment described in item 28, wherein the second reflecting surface reflects the light beams transmitted through the first reflecting surface so that a divergent angle of the light beams transmitted through the first reflecting surface becomes maximum within a predetermined surface including an optical axis between the mirror and the objective lens, and a central area of the second reflecting surface is shaped in an oval having a major axis in a perpendicular direction against the predetermined surface which includes the optical axis between the mirror and the objective lens.

According to the embodiment described in item 31, it is possible to obtain the same effects of the embodiment described in item 7.

32. The optical unit of the embodiment described in item 28, wherein the optical pickup apparatus comprises a first light source for emitting either of the first light beams or the second light beams, and a second light source for emitting the remaining light beams out of the first and the second light beams.

According to the embodiment described in item 32, it is possible to obtain the same effects of the embodiment described in item 1.

33. The optical pickup apparatus of the embodiment described in item 32, wherein an optical axis of either of the first light beams or the second light beams before entering into the mirror is offset from an optical axis of the remaining light beams out of the first and the second light beams.

According to the embodiment described in item 32, it is possible to obtain the same effects of the embodiment described in item 1.

34. The optical unit of the embodiment described in item 28, wherein a first protective layer thickness of the first optical recording medium is thinner than a second protective layer thickness of the second optical recording medium.

35. The optical unit of the embodiment described in item 28, wherein the first optical recording medium is a BD and the second optical recording medium is a CD.

36. The optical unit of the embodiment described in item 28, wherein the first optical recording medium is a HD-DVD and the second optical recording medium is a CD.

37. A mirror having a reflecting surface for selectively transmitting one kind of light beams among two kinds of light beams and reflecting the other light beams of the two kinds of light beams, the two kinds of light beams having a wavelength ratio being within a rage of 1.9 - 2.1, wherein, the mirror includes a first reflecting surface arranged to transmit one of light beams of the two kinds of light beams and a second reflecting surface having a predetermined curvature which is arranged to divergently reflect the remaining light beams of the two kinds of light beams, the second reflecting surface being different from the first reflecting surface.

38. The mirror of the embodiment described in item 37, wherein the second reflecting surface is a curved surface being non-rotational symmetry against an optical axis of the mirror.

According to the embodiment described in item 38, it is possible to obtain the same effects of the embodiment described in item 5.

As described above, according to the present invention, it is possible to correctly record and or reproduce information onto or from three kinds of optical recording media. It is also possible to miniaturize an optical pickup apparatus.

In this specification, "a phase structure" means a structure having multiple steps in an optical direction for giving incident light beams an optical path difference (phase difference). The optical path difference given to the incident light beams may be an integer multiple of the incident light beam wavelength or may be a non-integer multiple of the incident light beam wavelength. With regard to examples of the phase structure, there are two kinds of structures, one being a structure having steps periodically provided in the vertical direction against the optical axis as described above and the other being an optical path difference giving structure (it may also called a phase difference giving structure) having steps non-periodically provided in the vertical direction against the optical axis. "A diffractive structure" means a step structure which pitch (diffraction power) and depth (blaze wavelength) are set so that the diffraction efficiency for the specific diffraction order of the diffracted light beams of the light beams having a specific wavelength becomes higher than that of other diffraction order.

Preferable embodiments of the present invention will be described below by referring to drawings. However, the limits of the present invention are not limited to these embodiments.

A schematic configuration of an optical pickup apparatus of the present invention will be described here.

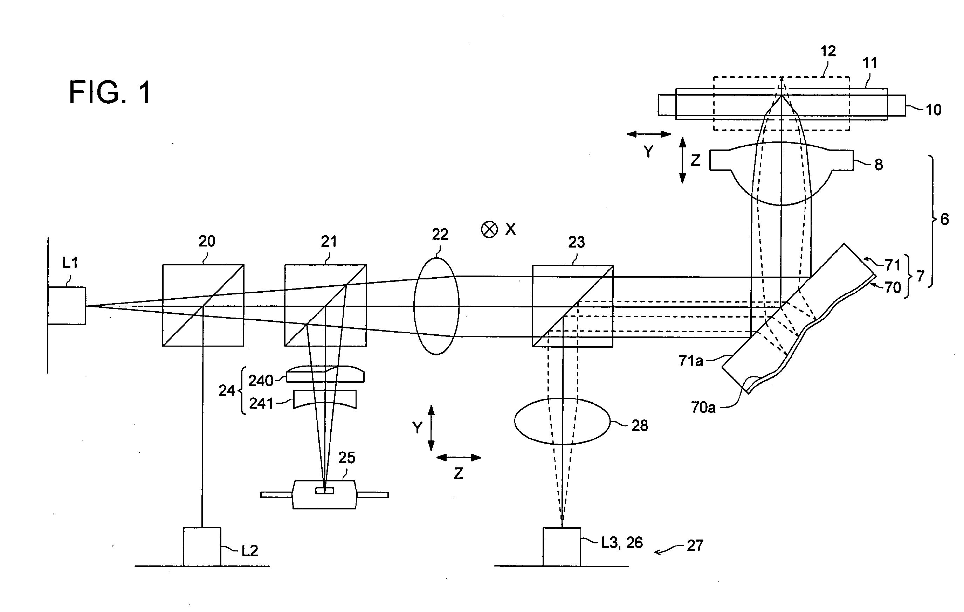

Fig. 1 illustrates a schematic configuration of an optical pickup apparatus 1.

As shown in Fig. 1; the optical pickup apparatus 1 includes semiconductor lasers L1, L2 and L3 as the first to the third light sources of the present invention.

The semiconductor laser L1 emits light beams having specific wavelength $\lambda 1$ as a first light beams from a wavelength range of 350 nm - 450 nm when recording and or reproducing information onto or from BD 10 (Blu-Ray Disc) as a first optical recording medium of the present invention. The thickness of the protective layer of the BD 10 in this embodiment is 0.085 mm or 0.0875 mm. The wavelength $\lambda 1$ may be, for example, 405 nm, 407 nm or 408 nm.

The semiconductor laser L2 emits light beams having specific wavelength $\lambda 2$ ($1.5 < \lambda 2 / \lambda 1 < 1.7$) as a second light beams from wavelength range of 620 nm - 680 nm when recording and or reproducing information onto or from DVD 11 as a second optical recording medium of the present invention. The thickness of the protective layer of the DVD 11 in this embodiment is 0.6 mm. The wavelength $\lambda 2$ may be, for example, 655 nm or 658 nm. In this specification, DVD means optical recording media of DVD family such as DVD-ROM, DVD-Video, DVD-Audio, DVD-RAM, DVD-R, DVD-RW, DVD+R and DVD+RW, etc.

The semiconductor laser L3 emits light beams having specific wavelength $\lambda 3$ ($1.9 < \lambda 3 / \lambda 1 < 2.1$) as a third light beams from wavelength range of 750 nm - 810 nm when recording and or reproducing information onto or from CD 12 as a third optical recording medium of the present invention. The semiconductor laser L3 together with a photo-detector forms a hologram laser unit 27. In this embodiment of the present invention, the thickness of the protective layer for CD 12 is 1.2mm. CD means CD family optical recording media such as CD-ROM, CD-Audio, CD-Video, CD-R and CD-RW, etc, in this specification.

Beam splitters 20 and 21, a collimator lens 22, a beam splitter 23 and an objective optical unit 6 are provided along the optical axis of the first light beams emitted from the semiconductor laser L1 from the lower side to the upper side in Fig. 1. BD 10, DVD 11 or CD 12 is arranged to be placed opposed to the objective optical unit 6 as an optical recording medium. When recording and or reproducing information onto or from BD and CD or BD and DVD, a working distance (WD) for each information recording medium being a distance between the last optical surface of a focusing optical element, namely, an optical surface of an objective lens located at the nearest to the image side in this embodiment, and the surface of each information recording medium located in the light source side is different from each other. Consequently, when the mirror and the objective lens are bodily moved to conduct focusing drive operations as the present invention, it is necessary to shift the optical axis for a distance corresponding to the difference of the working distance (WD). Accordingly, in this embodiment, the optical axis of one kind of light beams used in the optical pickup apparatus is shifted for the distance corresponding to the difference of the working distance (WD) in advance against the optical axis of the remaining light beams.

In this embodiment, the semiconductor laser L2 is provided in the right hand side of the beam splitter 20 in Fig. 1. The optical axis of the second light beams emitted from the semiconductor laser L2 is shifted in the Y-axis direction in Fig. 1 from the optical axis of the first light beams before entering into the objective optical unit 6, even though it is not shown in Fig. 1.

In this specification, the Y-axis direction means an optical axis direction, which is perpendicular to the Z-axis direction. Each optical element of the optical pickup apparatus 1 is arranged in a surface symmetry against YZ plane including the Y-axis direction and the Z-axis direction.

With regard to the method for offsetting the optical axis of the second light beams from the optical axis of the first light beams, for example, there are three methods, which will be described below.

(1) The first method will be described here. Each optical element is arranged so that a prism or a beam splitter reflects the light beams emitted from the semiconductor laser L2 90 degrees to cause the light beams to be in parallel with the first light beams after shaping the light beams into parallel light beams by a collimator lens. The distance between the collimator lens and the prism will be changed to offset the optical axis of the second light beams from the optical axis of the first light beams corresponding to the wavelength of the light beams. According to this method, since when changing the distance between the collimator lens and the prism, a reflecting position on the prism changes, the situation where the optical axis of the second light beams offsets from the optical axis of the first light beams occurs. With regard to a method for adjusting the distance between the collimator lens and the prism, firstly, configure a light beam-emitting unit by combining the semiconductor laser L2 and the collimator into the light beam-emitting unit. Then shift the light beam-emitting unit in the Z-axis direction or the Y-axis direction, while keeping the position of the prism at the same position.

(2) The second method will be described here. Firstly, arrange the semiconductor laser L1 so that the emitting point of the semiconductor laser L1 is slightly shifted from the emitting point of the semiconductor laser L2. Secondly, arrange a diffraction element for diffracting only the second light beams between the collimator lens 22 and the objective optical unit 6. Then coincide the optical axes of the semiconductor laser L1, the collimator lens 22 and the diffraction element. According to this method, the first light beams transmits the diffraction element and are guided to the objective optical unit after that the first light beams have been shaped into parallel light beams by the collimator lens 22. Meanwhile, the second light beams are shaped into substantially parallel light beams as off-axis light beams by the collimator lens 22. Then the diffraction element cause the second light beams to be parallel light beams. Accordingly, the optical axis of the second light beams offsets from the optical axis of the first light beams. In this case, the diffraction element may be combined with the collimator lens 22 into one unit.

(3) The third method will be described here. Firstly, a collimator lens shapes the light beams emitted from the semiconductor laser L2 into parallel light beams. Then each optical element is arranged so that the galvano-mirror reflects the parallel light beams to be substantially parallel with the first light beams, and the galvano-mirror is rotated. According to this method, since when rotating the galvano-mirror, the reflecting point on the galvano-mirror changes, the optical axis of the second light beams offsets from the optical axis of the first light beams.

In Fig. 1, a sensor lens 24 and a photo-detector 25 are arranged in the order in the right hand side of the beam splitter 21. The sensor lens 24 comprises a cylindrical lens 240 and a concave lens 241.

Further, in Fig. 1, a collimator les 28 and a hologram laser unit 27 are provided in the order in the right hand side of the beam splitter 23. The optical axis of a third light beams emitted from a semiconductor laser L3 of the hologram laser unit 27 offsets against the optical axis of the first light beams in the Y-axis direction before the third light beams are guded to the objective optical unit 6. In this embodiment, the optical axis of the third light beams offsets from the optical axis of the first light beams based on the method described in (1). However, the second method (2) may be applied to offset the optical axis of the third light beams against the optical axis of the first light beams.

Next, the objective optical unit 6 will be described below.

The objective optical unit 6 is an optical unit of the present invention. The objective optical unit 6 has a function to focus the first to the third light beams emitted from each semiconductor lasers L1, L2 and L3 onto the information recording surfaces 10a, 11a and 12a of BD 10, DVD 11 and CD 12. This objective optical unit 6 comprises a mirror 7 and a objective lens 8. An actuator (not shown) is arranged to bodily move the mirror 7 and the objective lens 8 in the Y-axis direction and Z-axis direction. Accordingly, since coma aberration caused by the movement of the objective lens 8 can be reduced comparing with the situation where the objective lens 8 and the mirror 7 are separately moved, the focusing capability and the tracking capability of the optical pickup apparatus 1 can be improved. A diaphragm member (not shown) is provided between the mirror 7 and the objective lens 8.

The mirror 7 reflects the first to the third light beams emitted from each semiconductor lasers L1, L2 and L3 and guides the light beams to the objective lens 8. The mirror includes a dichroic-mirror layer 71 and a substrate 70.

The dichroic mirror layer 71 is a wavelength-selection-transmission layer of the present invention. The dichroic mirror 71 comprises a reflecting surface 71a for reflecting the first and the second light beams on the surface thereon. The reflecting surface 71a is a first reflecting surface of the present invention, which is arranged to transmit the third light beams through the dichroic mirror layer 71. The reflecting surface 71a does not reflect the third light beams. In this embodiment, the reflecting surface 71a is a flat plane and leans 45 degrees against the Z-axis direction on the YZ plane.

The substrate 70 is a total reflection mirror provided on the rear side of the dichroic mirror layer 71. The substrate 70 comprises a reflecting surface 70a for converting the third light beams passed through the dichroic mirror layer 71 into divergent light beams while reflecting the third light beams.

The reflecting surface 70a is the second reflecting surface of the present invention. The reflecting surface 70a is arranged to be a free-curved surface being non-rotation symmetry. In detail, the reflecting surface 70a is arranged to reflect the third light beams so that the divergent angle in the plane including the optical axis between the mirror 7 and the objective lens 8, which is a YZ plane in the present invention, becomes maximum.

Concretely, the reflecting surface 70a is defined by the following formula (1) in an embodiment of the present invention.

$$Z(h) = \frac{h^2/r}{1 + \sqrt{1 - (1+k)(h/r)^2}} + \sum_i \sum_j C_{ij} X^i Y^j \qquad (1)$$

The left hand side of the formula (1), Z(h) denotes an axis of an optical axis direction when the traveling direction of light beams is set as an positive direction.

The first term of the right hand side of the formula (1) denotes a spherical surface term and the second term denotes a free-curved surface term. "i" and "j" is a 0 or a positive integer, "$C_{ij}$" denotes a free-curved surface coefficient, "k" denotes a conic coefficient, "r" denotes a radius of curvature and "h" denotes a height from the optical axis. In this embodiment, since each optical element is arranged to be a surface symmetry against the YZ-plane, it is possible to deem the all odd-terms of the free-curved surface coefficient $C_{ij}$ zero (0). Further, since it is possible to replace the spherical term by $X^2$ and $Y^2$ of the free-curved surface term, it becomes possible to put that C = 0 and k = 0. Also, since the dichroic mirror layer 71 leans 45 degrees against incident light beams, it is possible to put 0 on the term corresponding to $Y^1$ of free-curved surface coefficient $C_{ij}$, if the optical axis of the third light beams is arranged to pass through the center of the reflecting surface 70a and the total reflecting surface leans 45 degrees.

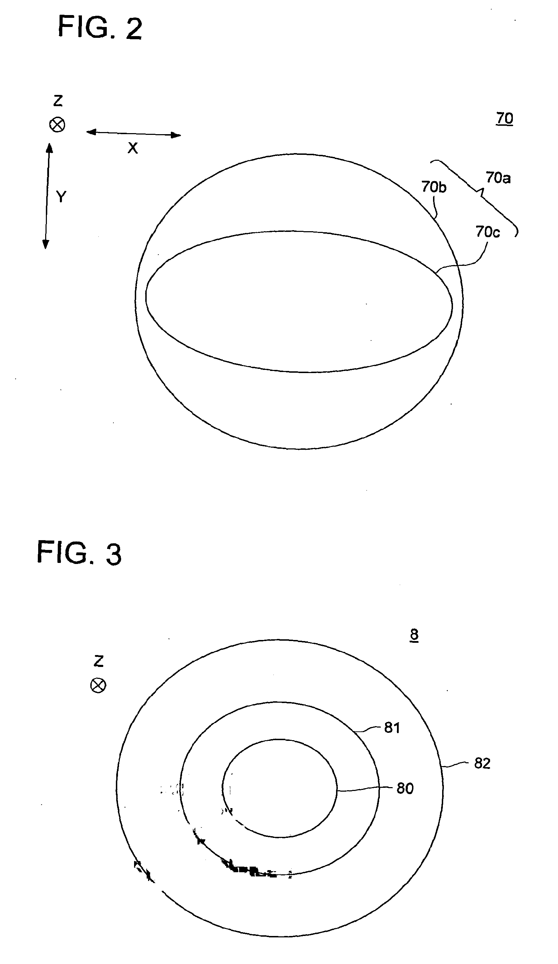

As shown in Fig. 2, the reflecting surface 70a is divided into a central area 70b intersecting the optical axis and a circumference area 70c located in the circumference side of the central area 70b.

The shape of the central area 70b is an oval having a major axis in the X-axis direction being perpendicular to the YZ plane. The central area 70b is arranged to guide the third light beams to the objective lens 8.

The circumference area 70c is arranged to reflect the third light beams incident thereto and to change the third light beams to flare components which do not contribute to form spot light beams on an information surface of CD 12.

The mirror 7 may be made by glass or may be formed by resin or by glass and plastic. For an example of a mirror formed by glass and plastic, there is a mirror having the substrate 70 formed by glass and the dichroic mirror layer 71 is formed by plastic.

The objective lens 8 is arranged to focus the first light beams onto an information recording surface 10a of BD 10, focus the second light beams onto an information recording surface 11a of DVD 11 and focus the third light beams onto an information recording surface 12a of CD 12. A single lens configures the objective lens 8. Comparing with the objective lens 8 configured by a lens unit, it is possible to miniaturize an optical pickup apparatus 1.

The image side numerical aperture NA of the objective lens 8 is 0.85 for the first light beams emitted from the first semiconductor laser L1, 0.66 for the second light beams emitted from the second semiconductor laser L2 and 0.51 for the third light beams emitted from the third semiconductor laser L3. The focus length of the objective lens 8 is 1.76 mm for the first light beams emitted from the first semiconductor laser L1, 1.89 mm for the second light beams emitted from the second semiconductor laser L2 and 1.93 mm for the third light beams emitted from the third semiconductor laser L3. The refractive index of the objective lens 8 is 1.55.

At least an optical surface of the two optical surfaces of the objective lens 8 is divided into the first area 80, the second area 81 and the third area 82.

The first to the third light beams which are focused onto the information recording surfaces 10a, 11a and 12a of DB 10, DVD 11 and CD 12 pass through the first area 80. The first and the second light beams which are focused onto the information recording surfaces 10a and 11a of DB 10 and DVD 11 pass through the second area 81. The first light beams which are focused onto the information recording surfaces 10a of DB 10pass through the third area 82.

A diffractive structure (not shown) is provided at least on the first area 80 and the second area 81 among the first area 80, the second area 81 and the third area 82. The diffractive structure corrects the spherical aberration of the first and the second light beams, in other words, the spherical aberration caused by the wavelengths difference of the first and the second light beams and spherical aberration caused by the substrate thickness difference which is relatively larger than the spherical aberration caused by the wavelength difference. The diffractive structure is arranged to show the maximum diffraction efficiency against the first order diffracted light beams of the first to the third light beams.

In general, it is known that it is difficult to correct the spherical aberration by a phase structure when one of the wavelength is an integer multiple of the other wavelength of the two wavelengths. In this embodiment, the ratio between wavelengths of λ1 and λ3 is about 2 while the ratio between wavelengths of λ1 and λ2 is not an integer multiple. Accordingly, as described above, the diffractive structure for correcting the spherical aberration of the light beams having wavelengths of λ1 and λ2, in other words, the spherical aberration caused by the wavelengths difference of the first and the second light beams and spherical aberration caused by the substrate thickness difference which is relatively larger than the spherical aberration caused by the wavelength difference, can be easily designed comparing with the diffractive structure for correcting the spherical aberration of the first and the third light beams having wavelengths of λ1 and λ3. Consequently, it becomes possible to reduce the cost of the objective optical unit 6.

In general, it is known that the more diffraction order number becomes small, the diffraction efficiency of each light beam becomes high when showing the maximum diffraction efficiency with the same diffraction order for the light beams of multiple wavelengths.

According, since the diffractive structure shows the maximum diffraction efficiency with the first order diffracted light beams of the first to the third light beams, it is possible to improve each diffraction efficiency of the first to the third light beams.

Since the diffractive structure shows the maximum diffraction efficiency with the first order diffracted light beams of the first to the third light beams, the strength of the diffraction action is proportion to the wavelengths of the first to the third light beams. Accordingly, the third light beams receive the strongest diffraction action among the first to the third light beams. As a result, the spherical aberration of the third light beams which is converted to divergent light beams by the reflecting surface 70a are corrected twice by the reflecting surface 70a and the diffractive structure of the objective lens 8. Accordingly, when showing the maximum diffraction efficiency with the first diffraction order for the first to the third light beams, a part of the function for correcting the spherical aberration can be shared by the diffractive structure. Consequently, since it become possible to decrease the degree of the divergence of the third light beams on the reflecting surface 70a, it is possible to improve focusing capability and tracking capability of the optical pickup apparatus for CD 12.

The objective lens 8 may be made by glass or may be formed by resin or by glass and plastic.

When the objective lens 8 is made by glass, it is hard to be influenced of the refractive index change of temperature change. Accordingly, it is possible to widen the operation temperature range of the objective lens 8. It is possible to reduce the load of the actuator when glass material having small specific gravity, preferably specific gravity being not more than 3.0, further preferably not more than 2.8 is used. When glass material having glass transfer point temperature of 400 °C is used, since formation can be preceded at relatively low temperature, it becomes possible to prolong the life of a metal tooling used for forming an objective lens. For examples of glass materials having low glass transfer point temperature, there are glass materials K-PG325 and K-PG375 (trade marks of Sumita Optical Glass, Inc.)

When the objective lens 8 is made of resin material, preferably resin material of cyclic olefin family is used for the resin material. Particularly, used for the material is the resin material having refractive index of 1.54 - 1.60 for wavelength of 405 nm at 25 °C and the changing rate of refractive index dN/dT ($°C^{-1}$) for wavelength 405 nm within the temperature range between -5°C and 70°C.

Further, so to speak "athermal resin" may be used for the resin material. The athermal resin is resin material including particles having a changing rate of refractive index being reverse characteristic against the changing rate of refractive index of basic resin, and the particle being uniformly mixed and dispersed in the basic resin material. With regard to the basic material, it is possible to appropriately use materials disclosed in Japanese Patent Applications No. 2002-308933, 2002-309040 and 308964. With regard to the particles, particles having the diameter of not more than 30 nm, preferably not more than 20 nm, and further preferably 10 - 15 nm may be used. The particles are preferably inorganic substance, and further preferably, the particles are oxide. It is preferable that the oxide state is saturated and the oxidation does not proceed more than that. When the particles are inorganic substance, it is possible to control the reaction against the basic resin being micromolecule organic substance low. And when the particles are oxides, it is possible to prevent degradation caused by the usage. Particularly, when the particles are minute particles of non-organic substance, it is possible to prevent degradation caused by oxidation even under the severe condition that the basic substance is exposed to high temperature and radiation of laser. It is also possible to add oxidation-preventing substance to athermal resin substance in order to prevent the basic material from oxidizing caused by other factors. It is preferable that the mixture and dispersion of basic substances and particles are conducted in-line when forming the objective lens. Namely, it is preferable that the materials, which have been mixed and dispersed, should not be cooled and hardened until objective lens is formed. In order to prevent cohesion of micromolecule, it is preferable that micromolecule is dispersed after charging electro-charges to the micromolecule. The ratio between the basic resin and micromolecule can be appropriately adjusted between 90 to 10 and 60 to 40. When the ratio is not more than 90 to 10, temperature change control effect comes down and reversibly when not less than 60 to 40, since the resin formability problem tends to occur, it is not preferable. Here, the volume ration can be appropriately increase of decrease to control the degree of the change of refraction index against temperature change. And it is also possible to blend the multiple kinds of nano-sized non-organic particles and disperse. As an example of athermal resin, for example, there is resin in which micromolecule of oxidizing niobium ($Nb_2O_5$) is disperse into acrylic acid resin with volume ration of 80 to 20.

When the objective lens 8 is made of glass and plastic, a hybrid lens in which a resin layer having a phase structure and a non-rotation symmetry surface is jointed onto a glass substrate may be used. In this case, it is possible to provide an objective lens having wide operation temperature range and to improve the transcription capability of a phase structure and a non-rotation symmetry surface. With regard to the formation method of a resin layer, suitable for manufacturing is the method for forming a resin layer by stamping a metal tooling onto which a phase structure and a non-rotation symmetry surface are formed onto ultraviolet hardening resin applied on a glass substrate and by radiating ultraviolet rays onto the ultraviolet hardening resin.

The operations and actions of the pickup apparatus 1 will be described below. When recording information onto a BD 10 or reproducing information from the BD 10, a semiconductor laser L1 emits the first light beams. As shown in solid lines of an optical path n Fig. 1, the first light beams pass through beam splitters 20 and 21 and converted to parallel light beams by a collimator lens 22. Then, the first light beams pass through a beam splitter 23 and are guided to an objective optical unit 6. Next, the first light beams are reflected by a reflecting surface 71a of a mirror 7 and focused onto an information recording surface l0a of the BD 10 by an objective lens 8, while spherical aberration is corrected by the diffractive structure. At this moment of time, the actuator arranged around the objective lens 8 moves the objective lens 8 for focusing and tracking operations. In this embodiment, since the actuator bodily moves the objective lens 8 and mirror 7 as a unit for focusing operation, the reflection position on the mirror 7 changes. Consequently, the optical axis of the light beams emitted from the mirror 7 is shifted as the objective lens 8 moves for the focusing operation. Accordingly, it is preferable to correct the offset of the optical axis of light beams by applying the first and the third methods described (1) and (3) above.

Information pits on the information recording surface 10a of the BD 10 reflect the light beams forming a light spot. Then the reflected light beams pass through the objective optical unit 6, the beam splitter 23 and the collimator lens 22. The reflected light beams are reflected by the beams splitter 21 and reached to a photo-detector 25 after a sensor lens 24 gives astigmatism to the reflected light beams. Using the output signal of the photo-detector 25 reproduces the information on the BD 10.

When recording information onto a DVD 11 or reproducing information from the DVD11, a semiconductor laser L2 emits the second light beams. The second light beams reflected by the beam splitter 20 pass through the beam splitter 21 and converted to parallel light beams by the collimator lens 22. Then, the second light beams pass through the beam splitter 23 and are guided to an objective optical unit 6. Next, the second light beams are reflected by the reflecting surface 71a of a mirror 7 and focused onto an information recording surface 11a of the DVD 11 by an objective lens 8 while spherical aberration is corrected by the diffractive structure. At this moment of time, the actuator arranged around the objective lens 8 moves the objective lens 8 for focusing and tracking operations.

Since the optical axis of the second light beams are arranged to offset in the Y-axis direction against the optical axis of the first light beams before entering to the mirror 7, the optical axis of the second light beams reflected by the mirror 7 coincides the optical axis of the first light beams, which is different from the situation when the second light beams arranged not to offset in the Y-direction. When focusing onto DVD 11, the same as the focusing onto the DB 10, it is preferable that the offset of the optical axis is corrected.

Information pits on the information recording surface 11a of the DVD11 reflect the light beams forming a light spot. Then the reflected light beams pass through the objective optical unit 6, the beam splitter 23 and the collimator lens 22. The reflected light beams are reflected by the beams splitter 21 and reached to a photo-detector 25 after a sensor lens 24 gives astigmatism to the reflected light beams. Using the output signal of the photo-detector 25 reproduces the information on the DVD 11.

When recording information onto a CD 12 or reproducing information from the CD 12, a semiconductor laser L3 emits the third light beams. As shown in doted lines of a light beam path in Fig. 1, the third light beams are converted into parallel light beams by a collimator lens 28. Then, the parallel light beams are reflected by the beam splitter 23 and are guided to the objective optical unit 6. Then, the third light beams are reflected while converted into divergent light beams by the reflecting surface 70a of the mirror 7 and focused onto an information recording surface 12a of the CD 12 by an objective lens 8. At this moment of time, the actuator arranged around the objective lens 8 moves the objective lens 8 for focusing and tracking operations.

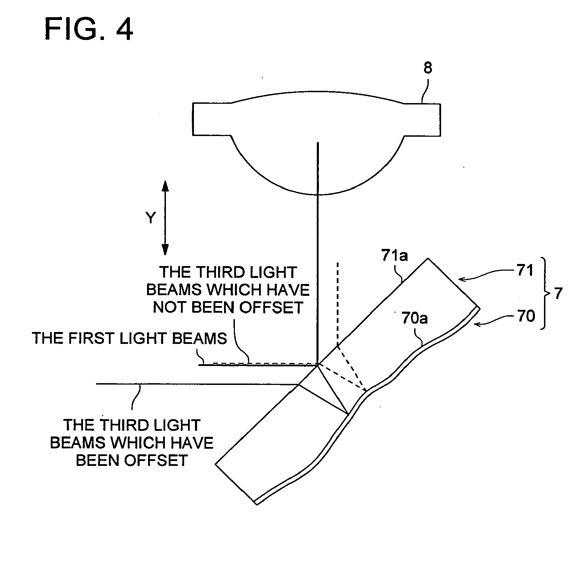

As shown in Fig. 4, since the optical axis of the third light beams are arranged to offset in the Y-axis direction against the optical axis of the first light beams before entering to the mirror 7, the optical axis of the third light beams reflected by the mirror coincides the optical axis of the first light beams, which is different from the situation when the third light beams are arranged not to offset in the Y-direction since only light beams incident to the central area 70b of the third light beams incident to the reflecting surface 70a are focused onto the CD 12 by the objective lens 8 and the light beams incident to the circumference area 70c are not focused onto the CD 12, it becomes possible to limit the aperture by adjusting the size of the central area 70c. Since the reflecting surface 70a is arranged to be a curved surface having non-rotational symmetry against the optical axis so that the divergent angle of the third light beams reflected by the reflecting surface 70a becomes the maximum angle in a Y-Z plane and the central area 70b is shaped in a oval having the major axis in the X-axis direction, the cross-sectional shape of the reflected light beams of the third light beams and the light spot become a circle. It is preferable that the offset of the optical axis is corrected when focusing as the same as the focusing onto BD 10.

Then the light beams formed into a light spot is modulated and reflected by the information recording surface 12a of CD 12. Next, this reflected light beams pass through the objective optical unit 6 and reflected by the beam splitter 23. Then the reflected light beams are condensed by the collimator lens 28 and reached to the photo-detector 26. Using the output signal of the photo-detector 26 reproduces the information on the CD 12.

As described above, the optical pickup apparatus 1 can correctly record and or reproduce information onto or from BD 10, DVD 11 and CD 12. Further, since the mirror 7 reflects the first to the third light beams and guides them to the objective lens 8, it becomes possible to make the straight distance from semiconductor lasers L1 - L30 to BD 10, DVD 10 and CD 12 short. As a result, it is possible to miniaturize the optical pickup apparatus 1.

Further, since the size of the central area 70b can limit the aperture, it is easier to miniaturize the optical pickup apparatus 1 comparing when arranging the aperture members for limiting the aperture around the mirror 7.

Further, since the oval shape of the central area 70b allows the light beam spot of the third light beams on the information recording surface 12a of CD to be circle, it is possible to correctly record and or reproduce information onto or from the CD 12.

Further, since the optical axis of the third light beams emitted from the mirror 7 can coincide with the optical axes of the first and the second light beams, it is possible to correctly record and or reproduce information onto or from BD 10, DVD 11 and CD 12.

Further, since the mirror 7 does not convert the first and the second light beams, which are shorter wavelengths than the wavelengths of the third light beams, to divergent light beams, the design of the objective lens 8 is easier than when the first light beams and the second light beams are converted to divergent light beams. Accordingly, the cost of the objective optical element 6 can be reduced.

According to the present invention, the mirror converts the incident light beams to light beams which spherical aberration can be corrected by the objective lens. However, this does not limit to the fact that incident parallel light beams are converted to divergent light beams. The point is that based on the fact that the objective lens is optimized for a wavelength of specific incident light beams, the mirror may convert incident light beams having other wavelength. Namely, in the embodiments of the present invention, an example in which the objective lens is originally optimized for BD is presented (the second embodiment). However when the lens which is optimized for CD is used, the lens may convert the incident light beams of the first light beams which are applied for recording and or reproducing information onto or from BD or HD-DVD to light beams which incident light beams converges.

In the embodiment described above, the first recording media is deemed to be BD 10. However it may be HD-DVD.

Further, the reflecting surface 70a of the mirror 7 is defined by the formula (1). However, the other shape may be allowed.

EP 1 691 360 A2

EMBODIMENT 1

Next, an embodiment of the objective optical unit 6 described above will be explained below. However, the embodiment of the present invention is not limited to this embodiment.

Tables 1 - 3 show the data of objective optical units for CD, DVD and BD.

Table 1

| Surface No. | Radius of Curvature | Thickness | nd | νd | Remarks |
|---|---|---|---|---|---|
| 1 | ∞ | ∞ | | | Emission Point |
| 2 | ∞ | 0.500 | 1.5091 | 56.40 | Mirror |
| 3 | ∞ | 0.500 | 1.5091 | 56.40 | |
| 4 | ∞ | 1.800 | | | |
| 5 | ∞ | 0.000 | | | Diaphragm |
| 6 | Refer to Table 5 | 2.040 | 1.6031 | 60.68 | Objective Lens |
| 7 | -3.3426 | 0.000 | | | |
| 8 | ∞ | 0.150 | | | |
| 9 | ∞ | 1:200 | 1.5830 | 59.92 | CD |
| 10 | ∞ | 0.000. | | | |

Table 2

| Surface No. | Radius of Curvature | Thickness | nd | νd | Remarks |
|---|---|---|---|---|---|
| 1 | ∞ | ∞ | | | Emission Point |
| 2 | ∞ | 0.000 | | | Mirror |
| 3 | ∞ | 0.000 | | | |
| 4 | ∞ | 1.800 | | | |
| 5 | ∞ | 0.000 | | | Diaphragm |
| 6 | Refer to Table 5 | 2.040 | 1.6031 | 60.68 | Objective Lens |
| 7 | -3.3426 | 0.000 | | | |
| 8 | ∞ | 0.409 | | | |
| 9 | ∞ | 0.600 | 1.5830 | 59.92 | DVD |
| 10 | ∞ | 0.000 | | | |

Table 3

| Surface Radius No. | Curvature | of Thickness | nd | νd | Remarks |
|---|---|---|---|---|---|
| 1 | ∞ | ∞ | | | Emission Point |
| 2 | ∞ | 0.000 | | | Mirror |
| 3 | ∞ | 0.000 | | | |
| 4 | ∞ | 1.800 | | | |
| 5 | ∞ | 0.000 | | | Diaphragm |
| 6 | Refer to Table 5 | 2.040 | 1.6031 | 60.68 | Objective Lens |
| 7 | -3.3426 | 0.000 | | | |

13

(continued)

| Surface Radius No. | Curvature | of Thickness | nd | νd | Remarks |
|---|---|---|---|---|---|
| 8 | ∞ | 0.601 | | | |
| 9 | ∞ | 0.088 | 1.5830 | 59.92 | BD |
| 10 | ∞ | 0.000 | | | |

In these tables, Surface No. 1 denotes emission points of semiconductor lasers L1 - L3; Surface Nos. 2 and 3 denote reflecting surfaces 71a and 70a of mirror 6; Surface No. 4 denotes an air layer between the mirror 7 and the objective lens 8; and Surface No. 5 denotes a diaphragm member. Surface Nos. 6 - 1, 6 - 2 and 6 - 3 denote the first area 80, the second area 81 and the third area 82 of the light source side surface of objective lens 8; and Surface No. 7 denotes the optical surface of the optical recording side of objective lens 8. Surface No. 8 denotes an air layer between the objective lens 8 and an optical recording medium; and Surface No. 9 denotes a protective layer of the optical recording medium; and Surface No. 10 denotes an information recording surface of the optical recording medium. Here, an air layer of Surface No. 8 denotes so called a working distance.

The reflecting surface 70a of the mirror 7 is formed in a shape as defined by a formula obtained by substituting free curved surface coefficient $C_{ij}$ in the Table 4 to formula (1). Here, the terms of $Y^2$, $Y^3$ and $Y^4$ work so that marginal light beams emitted in the Y-axis direction from dichroic mirror layer 71 become divergent light beams. Particularly, the term of $Y^3$ is a term for compensating the non-symmetry of optical system in the Y-axis direction. The terms of $X^2$, $X^2Y$, $x^4$ and $X^2Y^2$ work so that marginal light beams emitted in a X-axis direction from mirror layer 7 become divergent light beams. Particularly, the terms of $X^2Y$ and $X^2Y^2$ are the terms for adjusting the degree of divergence depending on the height in the Y-axis direction.

Table 4

| | |
|---|---|
| $C_{20}$ | -3.245E-03 |
| $C_{02}$ | -1.619E-03 |
| $C_{21}$ | 3.406E-05 |
| $C_{03}$ | 1.695E-05 |
| $C_{40}$ | -3.726E-07 |
| $C_{22}$ | -7.025E-07 |
| $C_{04}$ | -2.654E-07 |

In the mirror 7 described above, reflecting surfaces 70a and 71a lean 45 degrees as a whole against the optical axis. The center of the reflecting surface 71a offsets - 0.2665 mm in the Y-axis direction against the center of the reflecting surface 70a.

The light source side optical surface of the objective lens 8 is formed by a non spherical surface defined by a formula obtained by substituting the non-spherical surface coefficient $B_{2i}$ in the Table 5 below to formula (2). Here, Z(h) in the left side of the formula (2) is an axis in the optical axis direction when the traveling direction of the light beams is defined positive.

Table 5

| Surface No. | | 6-1 | 6-2 | 6-3 |
|---|---|---|---|---|
| Range | | 1.225mm≤h≤1.6mm | 1.02mm≤h≤1.225mm | 0mm≤h≤1.02mm |
| Non-spherical r Coefficient | | 1.200964 | 1.170455 | 1.144161 |
| | k | -6.221443E-01 | -6.833979E-01 | -7.018462E-01 |
| | $B_0$ | 5.790124E-03 | 2.451744E-03 | O.OOOOOOE+00 |
| | $B_4$ | 2.190511E-02 | 2.189382E-02 | 1.184166E-02 |
| | $B_6$ | -9.560971E-04 | 6.039078E-04 | 3.362285E-03 |
| | $B_8$ | 1.062932E-02 | 8.610864E-03 | 5.143037E-03 |
| | $B_{10}$ | -9.706246E-03 | -1.151212E-02 | -6.007068E-03 |
| | $B_{12}$ | 2.654199E-03 | 4.001037E-03 | 1.708855E-03 |
| | $B_{14}$ | 3.901301E-03 | 4.495081E-03 | 4.103295E-03. |
| | $B_{16}$ | -4.334712E-03 | -5.503750E-03 | -4.414535E-03 |
| | $B_{18}$ | 1.776122E-03 | 2.376382E-03 | 1.772613E-03 |
| | $B_{20}$ | -2.673371E-04 | -3.682418E-04 | -2.704472E-04 |

$$Z(h) = \frac{h^2/r}{1+\sqrt{1-(1+k)(h/r)^2}} + \sum_{i=0} B_{2i} h^{2i} \qquad (2)$$

The diffractive structure formed on the optical surface is described by the optical path length associated with the transmission surface. Further, the optical path difference is expressed by optical path difference function $\Phi$, which is defined by substituting $C_{2j}$ in Table 6 below to formula (3) below. Where, "m" denotes a diffraction order of diffracted light beams, which expresses the maximum diffracted light beam amount. "λ" denotes the wavelength of incident light beams and "$\lambda_B$" denotes the wavelength set when shipped.

Table 6

| Surface No. | | 6-1 | 6-2 | 6-3 |
|---|---|---|---|---|
| Diffraction Order (BD/DVD/CD) | | (5/3/2) | (1/1/1) | (1/1/1) |
| Wavelength set when shipped (nm) | | 408 | 490 | 490 |
| Optical-path Difference Function $\Phi$ | $C_1$ | 2.945860E-03 | 2.287066E-02 | 2.560732E-02 |
| | $C_2$ | 4.267238E-04 | 1.018557E-03 | -3.964066E-03 |
| | $C_3$ | 5.740437E-06 | -3.174218E-04 | 1.732074E-03 |
| | $C_4$ | -2.551056E-05 | -1.976973E-03 | -1.597889E-03 |
| | $C_5$ | -1.244067E-05 | 5.409899E-04 | 4.424285E-04 |

$$\Phi_b = \lambda/\lambda_B \times m \sum_{j=1} C_{2j} h^{2j} \qquad (3)$$

The optical surface of the optical recording medium side of the objective lens 8 is formed by a non-spherical surface defined by a formula obtained by substituting the non-spherical surface coefficient $B_{2j}$ in Table 7 below to the formula (2).

Table 7

| Surface No. | | 7 |
|---|---|---|
| Non-spherical Coefficient | k | -9.263354E+01 |
| | $B_4$ | 1.720190E-01 |
| | $B_6$ | -3.003577E-01 |
| | $B_8$ | 4.049347E-01 |
| | $B_{10}$ | -3.465867E-01 |
| | $B_{12}$ | 1.575827E-01 |
| | $B_{14}$ | -2.918472E-02 |
| | $B_{16}$ | - |
| | $B_{18}$ | - |
| | $B_{20}$ | - |

The image side numerical aperture NA of the objective lens 8 is arranged to be 0.85 for BD 10, 0.66 for DVD 11 and 0.51 for CD 12. The focal length of the objective lens 8 is arranged to be 1.76 mm for BD 10, 1.89 mm for DVD 11 and 1.93 mm for CD 12. The pupil diameter of the diaphragm surface of the objective lens 8 is arranged to be 3.0 mm for BD 10, 2.44 mm for DVD 11 and 2.0 mm for CD 12. The value of the height h is arranged to be $0 \text{ mm} \le h \le 1.02$ mm for the first area 80, $1.02 \text{ mm} \le h \le 1.22$ mm for the height of the second area 81 and $1.225 \text{ mm} \le h \le 1.6$ mm.

EMBODIMENT 2

Next, the other embodiments of the objective lens 6 described in the embodiment above will be explained below. However the present invention is not limited to this embodiment. The data for the embodiment of the objective optical unit for CD, DVD and BD will be shown in Tables 8 - 10.

Table 8 CD

| Drawing No. | Radius of Curvature | Thickness | nd | νd | Deviation | Remarks |
|---|---|---|---|---|---|---|
| 1 | ∞ ∞ | ∞ | | | | Emission point |
| 2 | ∞ | 0.50 | 1.5091 | 56.40 | 45° | |
| 3 | ∞ | 0.50 | 1.5091 | 56.40 | -0.2665 (mm) * | Mirror |
| 4 | ∞ | 1.80 | | | 45° | |
| 5 (Diaphragm surface) | ∞ | 0.00 | | | | Diaphragm |
| 6 | 1.2047 | 2.00 | 1.5891 | 61.3 | | Objective Lens |
| 7 | -3.5047 | 0.00 | | | | |
| 8 | ∞ | 0.22 | | | | W.D. |
| 9 | ∞ | 1.20 | 1.5830 | 59.92 | | Protective Layer (CD) |
| 10 | ∞ | 0.00 | | | | |
| * Only the third surface is decentered in the Y-axis direction. | | | | | | |

Table 9 DVD

| Surface No. | Radius of Curvature | Thickness | nd | vd | Deviation | Remarks |
|---|---|---|---|---|---|---|
| 1 | $\infty$ | $\infty$ | | | | Emission Point |
| 2 | $\infty$ | 0.00 | | | 45° | Mirror |
| 3 | $\infty$ | 0.00 | | | | |
| 4 | $\infty$ | 1.80 | | | 45° | |
| 5 (Diaphragm surface) | $\infty$ | 0.00 | | | | Diaphragm |
| 6 | 1.2047 | 2.00 | 1.5891 | 61.3 | | Objective Lens |
| 7 | -3.5047 | 0.00 | | | | |
| 8 | $\infty$ | 0.40 | | | | W.D. |
| 9 | $\infty$ | 0.60 | 1.5830 | 59.92 | | Protective Layer (DVD) |
| 10 | $\infty$ | 0.00 | | | | |

Table 10 BD

| Surface No. | Radius of Curvature | Thickness | nd | vd | Deviation | Remarks |
|---|---|---|---|---|---|---|
| 1 | $\infty$ | $\infty$ | | | | Emission Point |
| 2 | $\infty$ | 0.00 | | | 45° | Mirror |
| 3 | $\infty$ | 0.00 | | | | |
| 4 | $\infty$ | 1.80 | | | 45° | |
| 5 (Diaphragm Surface) | $\infty$ | 0.00 | | | | Diaphragm |
| 6 | 1.2047 | 2.00 | 1.5891 | 61.3 | | Objective Lens |
| 7 | -3.5047 | 0.00 | | | | |
| 8 | $\infty$ | 0.60 | | | | W.D. |
| 9 | $\infty$ | 0.0875 | 1.583 | 59.92 | | Protective Layer (BD) |
| 10 | $\infty$ | 0.00 | | | | |

The surface No. in the tables is the same as the EMBODIMENT 1.

The reflecting surface 70a of the mirror 7 is formed into a shape defined by the formula obtained by substituting free curved surface coefficient $C_{ij}$ in the Table 11 to the formula (1) above. The other explanations will be omitted here since the explanation is the same as EMBODIMENT 1.

Table 11 Free-curved surface Coefficient

| | |
|---|---|
| $C_{20}$ | -1. 61E-02 |
| $C_{02}$ | -7.96E-03 |
| $C_{21}$ | 8.48E-04 |
| $C_{03}$ | 4.15E-04 |
| $C_{40}$ | 2.09E-05 |
| $C_{22}$ | -2.16E-05 |
| $C_{04}$ | -1.55E-05 |
| $C_{41}$ | 2.92E-06 |

(continued)

| | |
|---|---|
| $C_{23}$ | -8.46E-07 |
| $C_{05}$ | 2.64E-07 |

The reflecting surfaces 70a and 71a of mirror 7 described above lean 45 degrees as a whole against the optical axis. The center of the reflecting surface of 71a offsets -0.2665 mm in the Y-axis direction against the center of reflection surface 70a.

The light source side optical surface of the objective lens 8 is formed into a shape defined by the formula obtained by substituting the non-spherical surface coefficient $B_{2j}$ in the Table 12 to the formula (2) above.

Table 12 Surface Data (Light-source side)

| Surface No. | | 6 |
|---|---|---|
| Non-spherical Coefficient | k | -6.607915E-01 |
| | $B_4$ | 1.798362E-02 |
| | $B_6$ | -2.509592E-03 |
| | $B_8$ | 1.194671E-02 |
| | $B_{10}$ | -9.462302E-03 |
| | $B_{12}$ | 2.450673E-03 |
| | $B_{14}$ | 3.936882E-03 |
| | $B_{16}$ | -4.307509E-03 |
| | $B_{18}$ | 1.782225E-03 |
| | $B_{20}$ | -2.765789E-04 |

The diffractive structure formed on the optical surface is defined by using an optical path length associated with the transmission wave surface. The optical path difference is defined by a optical path difference function $\Phi$ which is defined by substituting diffraction coefficient $C_{ij}$ in Table 14 shown below into formula (3). shown above.

Table 13 Diffraction Coefficient

| Surface No. | | 6 |
|---|---|---|
| Diffraction Order (BD/DVD/CD) | | (0/1/0) |
| Wavelength set when shipped (nm) | | 658 |
| Optical-path Difference Function $\varphi$ | $C_1$ | 1.161831E-02 |
| | $C_2$ | -1.198507E-03 |
| | $C_3$ | -7.210636E-04 |
| | $C_4$ | 4.010090E-04 |
| | $C_5$ | -2.263512E-04 |

The optical recording media side optical surface of the objective lens 8 is formed defined by the formula obtained by substituting non-spherical surface coefficient $B_{2J}$ of Table 14 below to formula (2) above.

Table 14 Recording Medium Side

| 7 |
|---|
| -8.869962E+01 |
| 1.683104E-01 |
| -2.995186E-01 |

(continued)

| |
|---|
| 3.969318E-01 |
| -3.387400E-01 |
| 1.535496E-01 |
| -2.822041E-02 |
| - |
| - |
| - |

The image side numerical aperture NA of the objective lens 8 is 0.85 for BD 10, 0.60 for DVD 11 and 0.51 for CD12. The focal length of the objective lens is 1.76 mm for BD 11, 1.88 mm for DVD 11 and 1.82 mm for CD 12. The pupil diameter of diaphragm surface of the objective lens 8 is 3.0 mm for BD 10, 2.22 mm for DVD 11 and 2.0 mm for CD 12. The objective lens of this embodiment, which is different from the objective lens of the embodiment 1, does not have a stepping structure having different characteristics for each multiple areas.

The root mean square of the aberration of the objective optical unit 6 on an optical axis is 0.013 $\lambda$rms for $\lambda$3, 0.006 $\lambda$rms for $\lambda$2 and 0.002 $\lambda$rms for $\lambda$1, which shows excellent results. The root mean square of the aberration is 0.060 $\lambda$rms for $\lambda$3 when the incident angle to the objective lens 8 is 0.5 degrees.

Still, when the diffraction order which shows the maximum diffraction efficiency of the objective lens 8 is arranged to be the second order for wavelength of $\lambda$2, and the first order for the wavelength of $\lambda$1, and the incident angle to the objective lens is set at 0.5 degrees, the root mean square becomes more than 0.160 $\lambda$rms for wavelength of $\lambda$3, which shows that the aberration has not been adequately corrected.

**Claims**

1. An optical unit of an optical pickup apparatus for recording and or reproducing information onto or from a first optical recording medium, a second optical recording medium and a third optical recording medium by applying a first light beams having wavelength of $\lambda$1, a second light beams having wavelength of $\lambda$2 and a third light beams having wavelength of $\lambda$3, where $\lambda$1 < $\lambda$2 < $\lambda$3, the optical unit comprising:

   an objective lens having a phase structure at least on an optical surface of the objective lens; and
   a mirror having a first reflecting surface for reflecting two kinds of light beams out of the first light beams, the second light beams and the third light beams and a second reflecting surface being different from the first reflecting surface and for reflecting the remaining one kind of light beams, the mirror guiding the first light beams, the second light beams and the third light beams reflected by the first and second reflecting surfaces to the objective lens,
   wherein the second reflecting surface converting the remaining one kind of light beams into divergent light beams and guides the divergent light beams to the objective lens; and
   wherein the phase structure corrects spherical aberration of the two kinds of light beams and the objective lens focuses the first light beams onto the first optical recording medium, the second light beams onto the second optical recording medium and the third light beams onto the third optical recording medium.

2. The optical unit of claim 1, wherein the first reflecting surface of the mirror reflects the first light beams and the second light beams, and the second reflecting surface of the mirror reflects the third light beams.

3. The optical unit of claim 2, wherein the wavelengths of $\lambda$1, $\lambda$2 and $\lambda$3 satisfy 1.9 < $\lambda$3 / $\lambda$1 < 2.1 and 1.5 < $\lambda$2 / $\lambda$1 < 1.7.

4. The optical unit of claim 2, wherein the second reflecting surface has a central area intersecting an optical axis of the optical unit and a circumference area located outside of the central area, and the objective lens focuses light beams among the third light beams guided to the central area of the second reflecting surface onto the third optical recording medium.

5. The optical unit of claim 1, wherein the second reflecting surface is a curved surface being non-rotational symmetry against an optical axis of the optical unit.

6. The optical unit of claim 4, wherein the second reflecting surface is a curved surface being non-rotational symmetry against an optical axis of the optical unit and the central area of the second reflecting surface is shaped in an oval.

7. The optical unit of claim 6, wherein the second reflecting surface reflects the remaining one kind of light beams so that a divergent angle of the remaining one kind of light beams becomes maximum within a predetermined surface including an optical axis between the mirror and the objective lens, and the central area is shaped in an oval having a major axis in a perpendicular direction against the predetermined surface.

8. The optical unit of claim 1, wherein the objective lens is configured by a single lens.

9. The optical unit of claim 1, wherein the phase structure is a diffractive structure, the diffractive structure being arranged to express a maximum diffraction efficiency with same order diffracted light beams against the first to the third light beams.

10. The optical unit of claim 9, wherein the diffractive structure is arranged to express a maximum diffraction efficiency with first order diffracted light beams of the first to the third light beams.

11. The optical unit of claim 3, wherein the phase structure is arranged to transmit the first light beams and the third light beams as they are guided to the phase structure and to express a maximum diffraction efficiency with first order diffracted light beams against the second light beams.

12. The optical unit of claim 1, further comprising:

an actuator for bodily moving the objective lens and the mirror.

13. The optical pickup apparatus of claim 1, further comprising:

a first light source for emitting the first light beams; a second light source for emitting the second light beams; and
a third light source for emitting the third light beams.

14. The optical unit of claim 12, wherein an optical axis of the remaining one kind of light beams before entering into the mirror is offset from an optical axis of the two kinds of light beams.

15. The optical unit of claim 1, wherein the first optical recording medium includes a first protective layer having thickness of t1, the second optical recording medium includes a second protective layer having thickness of t2 and the third optical recording medium includes a third protective layer having thickness of t3, wherein t1, t2 and t3 satisfy t1 < t2 < t3.

16. The optical unit of claim 1, wherein the first optical recording medium is a BD, the second optical recording medium is a DVD and the third optical recording medium is a CD.

17. The optical unit of claim 15, wherein the objective lens corrects spherical aberration of two kinds of light beams caused by a thickness difference between the first and the second and the third recording media.

18. A mirror for selectively transmitting or reflecting a first light beams having wavelength of $\lambda 1$, a second light beams having wavelength of $\lambda 2$ and a third light beams having wavelength of $\lambda 3$, where $\lambda 1 < \lambda 2 < \lambda 3$, the mirror comprising:

a first reflecting surface for reflecting two kinds of light beams out of the first light beams, the second light beams and the third light beams and transmitting remaining one kind of light beams; and
a second reflecting surface including a curved surface having a predetermined curvature for converting remaining one kind of light beams transmitted through the first reflecting surface into divergent light beams and reflecting the divergent light beams.

19. The mirror of claim 18, wherein wavelengths of $\lambda 1$, $\lambda 2$ and $\lambda 3$ satisfy $1.9 < \lambda 3 / \lambda 1 < 2.1$ and $1.5 < \lambda 2 / \lambda 1 < 1.7$.

20. The mirror of claim 18, wherein the second reflecting surface is a curved surface being a non-rotational symmetry against an optical axis of the mirror.

21. The mirror of claim 18, wherein the second reflecting surface has a central area intersecting optical axis of the optical unit and a circumference area located outside of the central area, and the second reflecting surface is a curved surface being a non-rotational symmetry against an optical axis of the optical unit, the central area of the second reflecting surface being shaped in an oval.

22. An optical unit of an optical pickup apparatus for recording and or reproducing information onto or from a first optical recording medium by applying a first light beams having wavelength of $\lambda 1$, a second optical recording medium by applying a second light beams having wavelength of $\lambda 2$ and a third optical recording medium by applying a third light beams having wavelength of $\lambda 3$, where $1.9 < \lambda 3 / \lambda 1 < 2.1$, the optical unit comprising:

an objective lens having a phase structure at least on an optical surface of the objective lens; and a mirror including a first reflecting surface for transmitting either of the first light beams or the third light beams out of the first to the third light beams and for reflecting the other light beams out of the first to the third light beams and a second reflecting surface for reflecting light beams transmitted through the first reflecting surface, the second reflecting surface being different from the first reflecting surface, the mirror guiding the first to the third light beams reflected by the first and the second reflecting surfaces to the objective lens, wherein the second reflecting surface converts spherical aberration of the light beams transmitted through the first reflecting surface into light beams which can be corrected by the objective lens and guides the light beams to the objective lens, and the phase structure of the objective lens corrects spherical aberration of two kinds of light beams reflected by the first reflecting surface of the mirror and the objective lens focuses the first to the third light beams onto each recording surface of the first to the third optical recording media.

23. The optical unit of claim 22, wherein the wavelengths of $\lambda 1$ and $\lambda 2$ satisfy $1.5 < \lambda 2 / \lambda 1 < 1.7$.

24. The optical unit of claim 22, further comprising:

an actuator for bodily moving the objective lens and the mirror.

25. The optical unit of claim 22, wherein the first optical recording medium includes a first protective layer having thickness of t1, the second optical recording medium includes a second protective layer having thickness of t2 and the third optical recording medium includes a third protective layer having thickness of t3, wherein t1, t2 and t3 satisfy $t1 \leq t2 < t3$.

26. The optical unit of claim 22, wherein the first optical recording medium is a BD, the second optical recording medium is a DVD and the third optical recording medium is a CD.

27. The optical unit of claim 25, wherein the objective lens corrects spherical aberration of two kinds of light beams, the spherical aberration being caused by a thickness difference between the first and the second recording media.

28. An optical unit of an optical pickup apparatus for recording and or reproducing information onto or from a first optical recording medium by applying light beams having relatively shorter wavelength among at least two kinds of light beams emitted from light sources, and a second optical recording medium by applying second light beams having relatively longer wavelength among the two kinds of light beams, wherein $1.9 <$ the wavelength of the second light beams / the wavelength of the first light beams $< 2.1$, the optical unit comprising:

an objective lens; and a mirror including a first reflecting surface for transmitting either of the first light beams or the second light beams and for reflecting remaining light beams out of the first and the second light beams and a second reflecting surface for reflecting light beams transmitted through the first reflecting surface, the second reflecting surface being different from the first reflecting surface, the mirror guiding the first and the second light beams reflected by the first or the second reflecting surfaces to the objective lens, wherein the mirror converts spherical aberration of light beams being either the first light beams or the second light beams into light beams which can be corrected by the objective lens and guides the light beams to the objective lens, and the objective lens focuses the first and the second light beams onto each recording surface of the first and the second optical recording media.

29. The optical unit of claim 28, further comprising:

an actuator for bodily moving the objective lens and the mirror.

30. The optical unit of claim 28, wherein the second reflecting surface is a curved surface being a non-rotational symmetry against an optical axis of the mirror.

31. The optical unit of claim 28, wherein the second reflecting surface reflects the light beams transmitted through the first reflecting surface so that a divergent angle of the light beams transmitted through the first reflecting surface becomes maximum within a predetermined surface including an optical axis between the mirror and the objective lens, and a central area of the second reflecting surface is shaped in an oval having a major axis in the perpendicular direction against a predetermined surface which includes the optical axis between the mirror and the objective lens.

32. The optical unit of claim 28, wherein the optical pickup apparatus comprises a first light source for emitting either of the first light beams or the second light beams, and a second light source for emitting the remaining light beams out of the first and the second light beams.

33. The optical pickup apparatus of claim 32, wherein an optical axis of either the first light beams or the second light beams before entering into the mirror is offset from an optical axis of the remaining light beams out of the first and the second light beams.

34. The optical unit of claim 28, wherein a first protective layer thickness of the first optical recording medium is thinner than a second protective layer thickness of the second optical recording medium.

35. The optical unit of claim 28, wherein the first optical recording medium is a BD and the second optical recording medium is a CD.

36. The optical unit of claim 28, wherein the first optical recording medium is a HD-DVD and the second optical recording medium is a CD.

37. A mirror having a reflecting surface for selectively transmitting one kind of light beams among two kinds of light beams and reflecting the other light beams of the two kinds of light beams, the two kinds of light beams having a wavelength ratio being within a rage of 1.9 - 2.1,
wherein, the mirror includes a first reflecting surface arranged to transmit one of light beams of the two kinds of light beams and a second reflecting surface having a predetermined curvature which is arranged to divergently reflect the remaining light beams of the two kinds of light beams, the second reflecting surface being different from the first reflecting surface.

38. The mirror of claim 37, wherein the second reflecting surface is a curved surface being non-rotational symmetry against an optical axis of the mirror.

FIG. 1

EP 1 691 360 A2

## FIG. 2

## FIG. 3

# FIG. 4

THE THIRD LIGHT
BEAMS WHICH HAVE
NOT BEEN OFFSET

THE FIRST LIGHT BEAMS

THE THIRD LIGHT
BEAMS WHICH HAVE
BEEN OFFSET